# FASCICULE DE BREVET EUROPEEN

(11) **EP 1 426 169 B1**
(45) Date de publication et mention de la délivrance du brevet: **20.09.2006**
(21) Numéro de dépôt: 03026367.7
(22) Date de dépôt: 18.11.2003
(51) Int. Cl.: B29D 30/16

(54) **Appareil de fabrication d'un renforcement pour pneumatiques de grande largeur**
Vorrichtung zur Herstellung eines Verstärkungselements für grossformatige Luftreifen
Apparatus for the manufacture of a reinforcing element for large-dimension tyres

(30) Priorité: 04.12.2002 FR 0215306
(43) Date de publication de la demande: 09.06.2004
(73) Titulaire: Société de Technologie Michelin, 63000 Clermont-Ferrand (FR); MICHELIN RECHERCHE ET TECHNIQUE S.A., 1763 Granges-Paccot (CH)
(72) Inventeur: Hinc, Henri, 63360 Saint Beauzire (FR)
(74) Mandataire: Bauvir, Jacques

(56) Documents cités:
- EP-A- 1 101 597
- EP-A- 1 122 057
- EP-A- 1 231 049
- US-A- 3 082 140
- US-A- 4 830 781

## Description

La présente invention concerne la fabrication des pneumatiques. Plus précisément, elle se rapporte à la mise en place de fils pour constituer un renforcement du pneumatique. Plus particulièrement, elle propose des moyens aptes notamment à fabriquer un tel renforcement sur une forme proche ou identique de la forme de la cavité interne du pneumatique, c'est à dire une forme sensiblement toroïdale, supportant l'ébauche de pneumatique pendant sa fabrication.

Dans ce domaine technique, on connaît déjà des procédés et appareils qui permettent d'intégrer la fabrication des renforcements de pneumatique à l'assemblage du pneumatique lui-même. Cela signifie que, plutôt que de recourir à des produits semi-finis, comme des nappes de renforcement, on réalise un ou des renforcements in situ, au moment où l'on fabrique le pneumatique, et à partir d'une bobine de fil. Parmi ces procédés et appareils, la solution décrite dans la demande de brevet EP 1 122 057 est bien adaptée pour la réalisation de renforcements de carcasse sur un noyau rigide dont la surface extérieure correspond sensiblement à la forme de la cavité interne du pneumatique final. On y voit un appareillage dans lequel le fil, destiné à constituer un renforcement de carcasse, est posé en arceaux contigus sur un noyau rigide, par un mécanisme présentant au moins deux bras arrangés en cascade, décrivant un mouvement de va-et-vient autour du noyau de façon à poser, progressivement et de façon contiguë, un arceau à chaque aller et un arceau à chaque retour, avec intervention de presseurs appropriés pour appliquer les extrémités desdits arceaux au fur et à mesure sur le noyau rigide. Le noyau a été revêtu préalablement de caoutchouc cru selon l'architecture du pneumatique à fabriquer, ce qui présente la propriété intéressante de permettre de coller suffisamment les arceaux et de les maintenir en place au moins pour les besoins de la fabrication.

L'état de la technique connaît plusieurs autres appareils à bras unique ou multiples, décrivant des mouvements alternatifs pour transporter un oeilleton (ou un organe de dépose du fil similaire dans sa fonction) d'un côté à l'autre de la forme servant de support de fabrication pour un pneu. On peut citer les demandes de brevet EP 0 962 304, EP 1 231 049 et EP 1 231 050.

Si l'on souhaite construire un appareil apte à fabriquer des pneus de très grande largeur, on peut être conduit à un encombrement conséquent dans la dimension radiale par rapport à la forme de fabrication, notamment un encombrement qui peut devenir considérablement plus important que pour un appareil à chaîne comme décrit dans la demande de brevet EP 0 580 055.

L'objectif de la présente invention est d'augmenter la capacité des appareils réalisés sur le principe d'un ou de plusieurs bras décrivant un mouvement alternatif à fabriquer des pneus de grande largeur, sans trop alourdir lesdits appareils et en les rendant aussi compacts que possible.

L'invention propose un appareil de fabrication d'un renforcement pour pneumatique, ledit appareil étant destiné à fabriquer un renforcement constitué à partir d'un fil, ledit appareil comprenant un bâti et étant destiné à être utilisé en coopération avec une forme sensiblement toroïdale, montée sur le bâti de façon rotative autour d'un axe de rotation, sur laquelle on construit progressivement ledit renforcement en déposant des arceaux dudit fil selon une trajectoire souhaitée pour ledit fil à la surface de ladite forme, ledit appareil comprenant :
- un organe de dépose du fil dans lequel le fil peut coulisser,
- un mécanisme d'animation comportant au moins un bras sur lequel est monté, directement ou indirectement, ledit organe de dépose, le mécanisme d'animation étant agencé pour transporter ledit organe de dépose selon un mouvement cyclique, en va-et-vient, l'amenant en cycles successifs au voisinage de chacune des extrémités souhaitées pour le fil dans ladite trajectoire,
- des presseurs proches de chaque extrémité de ladite trajectoire, pour appliquer le fil sur la forme au moins auxdites extrémités,
caractérisé en ce que
- le mécanisme d'animation est monté sur le bâti par l'intermédiaire d'un support qui lui-même est monté sur des moyens procurant un degré de liberté par rapport au bâti permettant un mouvement compris dans un plan parallèle à l'axe de rotation de la forme.

L'intérêt de cette conception est de conférer au mécanisme d'animation un degré de liberté de mouvement supplémentaire par la translation transversale fonctionnelle d'un support sur lequel il est monté, et d'augmenter en cela la capacité de pose en largeur parallèlement à l'axe de rotation de la forme de fabrication, sans augmentation substantielle de la dimension dans le sens radial dudit appareil.

L'invention peut être utilisée avec de nombreux mécanismes de pose d'un fil de renforcement, notamment parmi les mécanismes connus tous ceux à bras alternatif(s) décrits dans les demandes de brevet précitées, ou encore celui décrit dans la demande de brevet déposée le même jour par les mêmes déposants et ayant pour titre : « appareil de fabrication d'un renforcement pour pneumatique, à bras de pose multiples comportant un mouvement guidé par un suiveur de came coulissant dans une lumière ».

Deux exemples d'applications sont donnés ci-dessous : un exemple où le mécanisme d'animation ne comporte qu'un seul bras oscillant à l'extrémité duquel est directement monté l'organe de dépose. Le second exemple montre un mécanisme d'animation comportant des bras multiples oscillants : le mécanisme d'animation comporte un bras principal monté à l'extrémité de deux bras auxiliaires, l'organe de dépose est monté directement à l'extrémité du bras principal. Bien entendu, ces exemples ne sont pas limitatifs. Dans tous ces exemples, étant donné qu'il s'agit chaque fois de fabriquer un pneumatique à carcasse radiale, lesdits moyens procurant au support un degré de liberté organisent un mouvement parallèle à l'axe de rotation de la forme, sans que ceci soit limitatif.

Le lecteur est invité à consulter plus en détails notamment par exemple la demande de brevet EP 1 122 057 car le procédé de fabrication d'un pneu mis en oeuvre dans la présente demande est identique à celui de ladite demande. L'appareil est destiné à être utilisé avec un système de motorisation commandant en synchronisme la rotation de la forme, le mécanisme d'animation et les presseurs. En outre, la présente invention utilise les presseurs décrits dans la demande de brevet EP 1 122 057 (ensemble comportant un marteau et une fourche), pour permettre la formation d'une boucle avec le fil de renforcement et pour appliquer ladite boucle contre le noyau.

Avant d'aborder en détails la description des nouveaux moyens d'animation de l'organe de dépose du fil, rappelons quelques points utiles.

Notons tout d'abord que, comme dans la demande de brevet EP 1 122 057 déjà citée, le terme "fil" doit bien entendu être compris dans un sens tout à fait général, englobant un monofilament, un multifilament, un assemblage comme par exemple un câble ou un retors, ou un petit nombre de câbles ou retors groupés, et ceci quelle que soit la nature du matériau, et que le "fil" soit pré revêtu de caoutchouc ou non. Dans le présent mémoire, on emploie le terme "arceau" pour désigner un tronçon de fil allant d'un point singulier à un autre dans le renforcement. L'ensemble de ces arceaux disposés sur tout le pourtour du pneumatique forme le renforcement proprement dit. Un arceau au sens défini ici peut faire partie d'une carcasse, ou d'un renfort de sommet, ou de tout autre type de renfort. Ces arceaux peuvent être individualisés par une coupe du fil en cours de pose, ou tous reliés entre eux dans le renforcement final, par exemple par des boucles.

Fondamentalement, l'invention traite de la dépose en continu d'un fil de renforcement, dans une configuration aussi proche que possible de la configuration dans le produit final. Le fil est délivré à la demande par un distributeur approprié comportant par exemple une bobine de fil et le cas échéant un dispositif de contrôle de la tension du fil extrait de la bobine. L'appareil de fabrication d'un renfort à partir d'un seul fil coopère avec une forme (noyau rigide ou une membrane armée) sur laquelle on fabrique le pneumatique. Il importe peu que le renforcement soit fabriqué en plusieurs rotations successives de la forme par devant les organes de pose décrits, avec coupe du fil ou non entre deux rotations successives.

Lorsque l'on définit des positions, des directions ou des sens avec les mots "radialement, axialement, circonférentiellement", ou lorsque l'on parle de rayons, on prend pour repère le noyau sur lequel on fabrique le pneumatique, ou le pneumatique par lui-même, ce qui revient au même. L'axe géométrique de référence est l'axe de rotation de la forme.

Eu outre, les organes de pose du fil décrits ici permettent aussi de réaliser un renforcement, par exemple un renforcement de carcasse, dans lequel le pas de pose du fil est variable. On entend par "pas de pose" la distance résultant de la somme de l'écart entre deux fils adjacents et le diamètre du fil. Il est bien connu que pour un renforcement de carcasse, l'écart entre fils varie selon le rayon auquel on le mesure. Il ne s'agit pas de cette variation dont il est question ici, mais bien d'un pas variable à un rayon donné. Il suffit pour cela de, sans changer la cadence de travail de l'organe de dépose, faire varier selon toute loi appropriée la vitesse de rotation de la forme. On obtient ainsi un pneumatique dont les fils de renforcement de carcasse, par exemple pour une carcasse radiale, sont disposés selon un pas présentant une variation contrôlée pour une position radiale donnée.

Enfin, le bras ou les bras multiples font décrire à l'organe de dépose du fil un mouvement sensiblement compris dans un plan -appelé dans la suite le plan de mouvement- perpendiculaire à l'axe géométrique de rotation du ou des bras. Dans certaines mises en oeuvre particulières de l'invention, tout comme dans la demande de brevet EP 1 122 057 précitée, ledit plan de mouvement est lui-même animé d'un mouvement ayant un rôle fonctionnel comme cela apparaîtra ci-dessous.

La suite de la description permet de bien faire comprendre tous les aspects de l'invention, en s'appuyant sur les figures suivantes :
La figure 1 est une perspective schématique montrant un premier mode de réalisation d'un appareil selon l'invention ;
La figure 2 représente les stades successifs du fonctionnement du premier mode de réalisation ;
La figure 3 est une perspective schématique montrant un deuxième mode de réalisation d'un appareil selon l'invention ;
La figure 4 représente les stades successifs du fonctionnement du deuxième mode de réalisation.

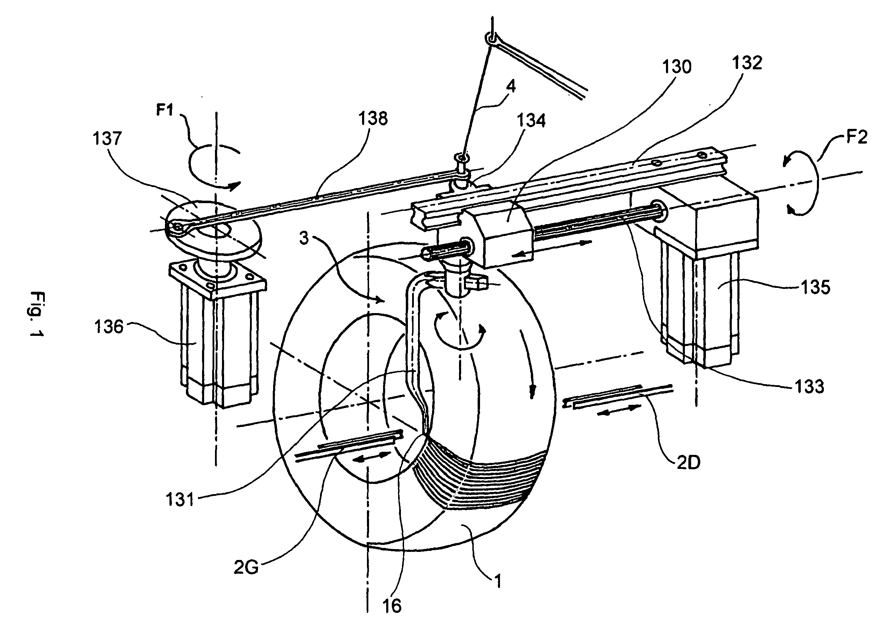

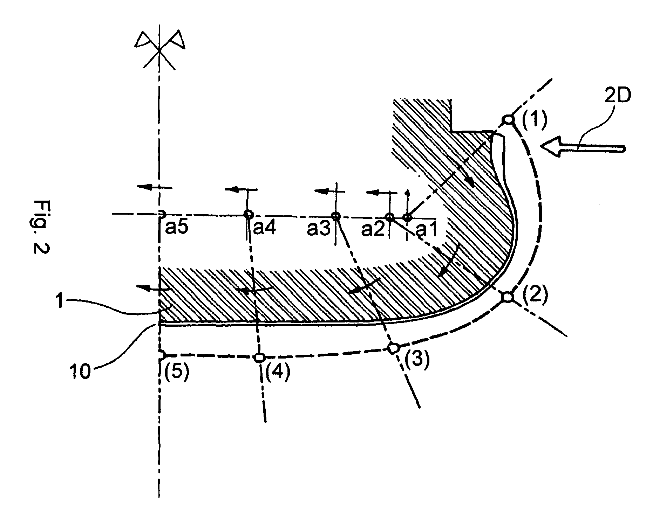

A la figure 1 (ainsi que d'ailleurs pour tous les exemples décrits, sans toutefois que ceci soit limitatif), la forme est un noyau 1 (rigide et démontable) définissant la géométrie de la surface intérieure du pneumatique. Celui-ci est revêtu de caoutchouc 10 (voir figure 2), par exemple d'une couche de gomme d'étanchéité à base de caoutchouc butyl, et d'une couche de gomme assurant l'ancrage des fils de carcasse sur le noyau pendant la fabrication, puis l'enrobage de ceux-ci dans le pneu vulcanisé. Le caoutchouc 10 recouvrant le noyau 1 permet de retenir un fil 4 sur le noyau 1 au fur et à mesure de sa dépose, par un effet de collage. Bien entendu, le noyau 1 est entraîné en rotation par tout dispositif convenable, non représenté.

A la figure 1, on voit un mécanisme d'animation 3 à bras unique ressemblant à ce qui est décrit dans la demande de brevet EP 1 231 049. On voit un bras 131 unique monté sur une platine 130. Cette platine 130 constitue un support portant le mécanisme d'animation, ici constitué par le bras unique 131. La platine 130 est montée coulissante sur un rail 132. La platine 130 comporte une patte 134 à laquelle est une bielle 138 est articulée. La bielle 138 est par ailleurs articulée à une manivelle 137 entraînée en rotation par un moteur 136. Le mouvement de rotation du moteur ne s'inverse pas ; la cadence de fonctionnement de l'appareil est bien entendu proportionnelle à la vitesse de rotation du moteur 136. Pour faire fonctionner l'appareil à cadence constante, c'est à dire à un nombre d'arceaux de fil déposés par unité de temps constant, le moteur 136 peut tourner à régime constant (ce n'est cependant pas obligatoire). Cela est symbolisé au dessin par une flèche F1 pointant d'un seul côté. La platine 130 effectue un mouvement de translation alternative, guidé par le rail 132. L'amplitude de ce mouvement dépend de la dimension de la manivelle 137, laquelle peut être réglable (non représenté).

Le mouvement du bras 131 est commandé par un moteur 135 qui entraîne un arbre cannelé 133. L'arbre cannelé 133 traverse la platine 130. Le mouvement de rotation du moteur 135 n'est pas continu : le moteur 135 est commandé de façon à obtenir un mouvement alternatif d'une amplitude prédéterminée, ce mouvement étant transmis au bras 131 par l'intermédiaire d'un simple renvoi de mouvement interne à la platine 130 (non représenté). Ce type de mouvement, alternatif, est symbolisé au dessin par une flèche F2 pointant des deux côtés. Convenons d'appeler cette commande de mouvement par l'expression « came électrique ». De préférence, non seulement ce mouvement change de sens, mais en outre sa vitesse est continûment variable de façon à obtenir les positions successives des points caractéristiques qui vont être expliquées à l'aide de la figure 2. Bien entendu, les mouvements de la platine 130 et du bras 131 sont synchrones.

Le mouvement de translation de la platine 130, combiné au mouvement du bras 131 est illustré à la figure 2. On voit les positions respectives a1, a2, a3, a4 et a5 possibles du centre de rotation du bras 131. En superposant ce déplacement transversal au mouvement propre du mécanisme d'animation à bras unique (c'est un cercle, voir demande de brevet EP 1 231 049), on obtient le mouvement global suivant : la courbe en traits interrompus épais portant les repères (1), (2), (3), (4) et (5) représente le mouvement de l'extrémité 16 du bras 131 de pose, hors de laquelle le fil 4 est dévidé.

En variante, on aurait pu commander le mouvement de la platine 130 par une came électrique. On pourrait aussi commander les deux mouvements (celui du bras 131 et celui de la platine 130) chacun par une came électrique. En variante encore, on aurait pu commander l'un ou l'autre des mouvements du bras 131 ou de la platine 130, ou les deux, par un système à came mécanique, dessinée pour obtenir les positions successives préférées décrites à la figure 2.

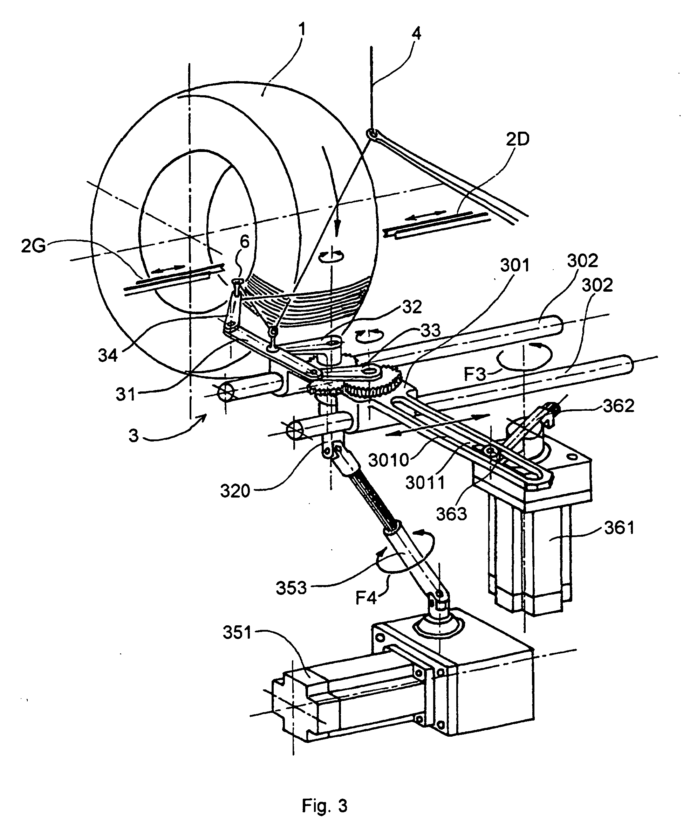

A la figure 3, le mécanisme d'animation 3 est similaire à ce qui a déjà été décrit dans la demande de brevet EP 1 122 057. L'organe de dépose est un oeilleton 6 monté sur un bras d'extrémité 34. Un bras principal 31 est monté sur une platine 301 au moyen d'un bras auxiliaire avant 32 et d'un bras auxiliaire arrière 33. Le bras auxiliaire avant 32 est monté sur un arbre 320 et le bras auxiliaire arrière 33 est monté sur un arbre 330. Le bras d'extrémité 34 s'incline par rapport au bras principal 31 de façon à rapprocher l'oeilleton 6 du bourrelet du futur pneumatique, même dans le cas où la forme de fabrication est plus étroite à hauteur du bourrelet que à mi flanc. Le choix du degré d'inclinaison, c'est à dire de rapprochement du la zone du futur bourrelet, est obtenu par une commande judicieuse dont le lecteur trouvera tous les détails dans la demande de brevet EP 1 122 057 (non représentée ici pour ne pas surcharger le dessin). Lesdits bras n'effectuent pas de rotation continue, mais oscillent dans les limites d'un arc inférieur à 360°, la valeur précise dépendant de la constitution exacte du mécanisme d'animation à bras multiples 3 et de l'application visée.

La platine 301 est montée coulissante sur deux barreaux parallèles 302. La platine 301 comporte une patte 3010 à l'intérieur de laquelle est creusée une lumière 3011. La platine 301 peut effectuer un mouvement de translation alternative, guidé par les barreaux 302, grâce à un moteur 361 commandant un levier 362. La rotation du moteur ne s'inverse pas, comme symbolisé au dessin par une flèche F3 pointant d'un seul côté (ce qui n'exclut pas une vitesse variable). A l'extrémité du levier 362 est installé un téton 363 qui est engagé dans la lumière 3011.

Le mouvement du mécanisme d'animation 3 à bras multiples est commandé par un moteur 351 qui entraîne l'arbre 320 par l'intermédiaire d'un arbre télescopique 353. L'arbre 330 est entraîné par l'arbre 320 via une cascade d'engrenages disposée sur la platine 301 et réalisée de telle sorte que l'arbre 320 peut osciller selon une amplitude par exemple d'environ 240°. Ce type de mouvement, alternatif, est symbolisé au dessin par une flèche F4 pointant des deux côtés. Dans ce mode de réalisation comme dans le précédent, on peut adopter de nombreuses variantes pour la commande des mouvements, en utilisant des cames mécaniques, ou des cames électriques.

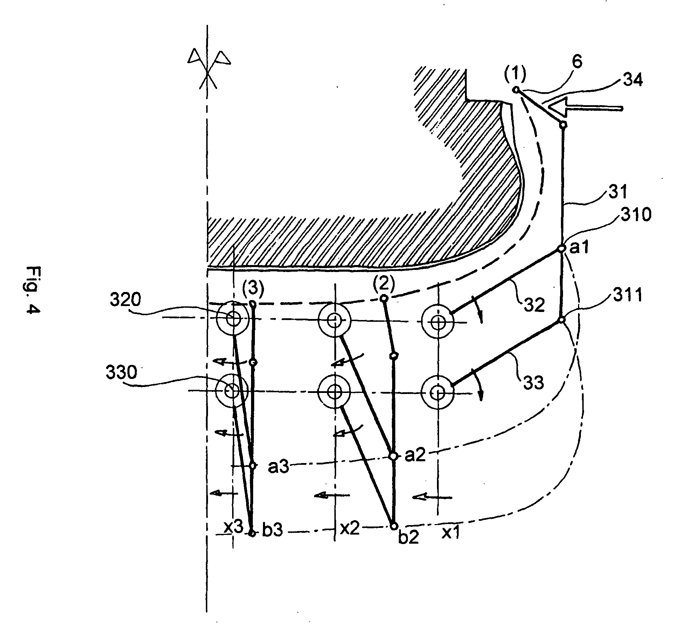

Le mouvement de translation de la platine 301, combiné au mouvement du mécanisme d'animation 3 à bras multiples est illustré à la figure 4. On voit les positions respectives x1, x2 et x3 qui sont la trace d'un plan imaginaire reliant les axes géométriques des arbres 320 et 330. Le déplacement de la platine 301 provoque le déplacement des arbres 320 et 330, donc le déplacement des centres de rotation des arbres auxiliaires avant 32 et arrière 33. En superposant ce déplacement transversal au mouvement propre du mécanisme d'animation 3 à bras multiples expliqué à l'aide de la figure 2, on obtient les mouvements globaux suivants : la courbe en traits interrompus épais portant les repères (1), (2) et (3) représente le mouvement de l'oeilleton 6 ; la courbe en traits d'axe portant les repères a1, a2 et a3 représente le mouvement dans l'espace de l'axe 310, c'est-à-dire aussi le mouvement dans l'espace du centre de rotation 31R du bras principal 31 ; enfin, la courbe portant les repères b1, b2 et b3 représente le mouvement dans l'espace du téton 311.

L'ensemble du mécanisme d'animation à bras 3, bras unique ou bras multiples, est assez compact. L'ensemble des organes de pose, à savoir le mécanisme d'animation à bras multiples 3, la commande du mouvement de la platine et les dispositifs presseurs 2, y compris le moteur et le mécanisme d'entraînement, forment un sous-ensemble pouvant facilement être présenté au noyau de façon appropriée, et pouvant être escamoté pour par exemple présenter au noyau d'autres dispositifs utilisés pour la fabrication d'un pneumatique ou pour l'évacuation du noyau vers d'autres postes de confection d'un pneumatique.

## Revendications

1. Appareil de fabrication d'un renforcement pour pneumatique, ledit appareil étant destiné à fabriquer un renforcement constitué à partir d'un fil (4), ledit appareil comprenant un bâti et étant destiné à être utilisé en coopération avec une forme (1) sensiblement toroïdale, montée sur le bâti de façon rotative autour d'un axe de rotation, sur laquelle on construit progressivement ledit renforcement en déposant des arceaux dudit fil selon une trajectoire souhaitée pour ledit fil à la surface de ladite forme, ledit appareil comprenant :
• un organe de dépose du fil dans lequel le fil peut coulisser,
• un mécanisme d'animation comportant au moins un bras (131) sur lequel est monté, directement ou indirectement, ledit organe de dépose, le mécanisme d'animation étant agencé pour transporter ledit organe de dépose selon un mouvement cyclique, en va-et-vient, l'amenant en cycles successifs au voisinage de chacune des extrémités souhaitées pour le fil dans ladite trajectoire,
• des presseurs (2G et 2D) proches de chaque extrémité de ladite trajectoire, pour appliquer le fil sur la forme au moins auxdites extrémités,
**caractérisé en ce que**
• le mécanisme d'animation est monté sur le bâti par l'intermédiaire d'un support qui lui-même est monté sur des moyens (132, 136, 137, 138) procurant un degré de liberté par rapport au bâti permettant un mouvement compris dans un plan parallèle à l'axe de rotation de la forme.

2. Appareil selon la revendication 1, dans lequel lesdits moyens (132) procurant au support un degré de liberté organisent un mouvement parallèle à l'axe de rotation de la forme

3. Appareil selon la revendication 1, dans lequel le mécanisme d'animation comporte un seul bras oscillant (131) à l'extrémité duquel est monté ledit organe de dépose.

4. Appareil selon la revendication 1, dans lequel le mécanisme d'animation comporte des bras multiples (31, 32, 33, 34).

5. Appareil selon la revendication 3 dans lequel le mécanisme d'animation comporte un bras principal monté à l'extrémité de bras auxiliaires.

6. Appareil selon la revendication 4 dans lequel ledit organe de dépose est monté directement à l'extrémité du bras principal.

7. Appareil selon l'une des revendications 1 à 5, dans lequel l'organe de dépose est un oeilleton (6).

8. Appareil selon l'une des revendications 1 à 6, utilisé avec un système de motorisation commandant en synchronisme la rotation de la forme, le mécanisme d'animation et les presseurs, dans lequel le système de motorisation commande en synchronisme le mouvement dudit support.

## Claims

1. Device for the fabrication of a tyre reinforcement, the said device being designed to fabricate a reinforcement made from a cord (4), the said device comprising a frame and being designed for use in co-operation with an essentially toroidal form (1) which is mounted on the frame and able to rotate about a rotation axis, on which the said reinforcement is progressively built up by laying arcs of the said cord along a trajectory desired for the said cord on the surface of the said form, the said device comprising:
• a cord laying element through which the cord can slide,
• an actuation mechanism comprising at least one arm (131) on which the said cord laying element is mounted directly or indirectly, the actuation mechanism being designed to move the said cord laying element in a cyclic, back and forth movement, bringing it in successive cycles close to each of the ends desired for the cord in the said trajectory,
• pressing elements (2G and 2D) near each end of the said trajectory, to apply the cord onto the form at least at the said ends,
**characterised in that**
• the actuation mechanism is mounted on the frame via a support which is itself mounted on means (132, 136, 137, 138) that allow a degree of freedom relative to the frame which enables movement in a plane parallel to the rotation axis of the form.

2. Device according to Claim 1, in which the said means (132) that allow a degree of freedom for the support enable movement parallel to the rotation axis of the form.

3. Device according to Claim 1, in which the actuation mechanism comprises a single oscillating arm (131) at whose end the said cord laying element is mounted.

4. Device according to Claim 1, in which the actuation mechanism comprises multiple arms (31, 32, 33, 34).

5. Device according to Claim 3, in which the actuation mechanism comprises a main arm mounted at the end of auxiliary arms.

6. Device according to Claim 4, in which the said cord laying element is mounted directly at the end of the main arm.

7. Device according to any of Claims 1 to 5, in which the cord laying element is an eyelet (6).

8. Device according to any of Claims 1 to 6, used with a motorisation system which controls and synchronises the rotation of the form, the actuation mechanism and the pressing elements, in which the motorisation system controls the movement of the said support in synchronisation.

## Patentansprüche

1. Vorrichtung zur Herstellung einer Verstärkung für Luftreifen, wobei die Vorrichtung für die Herstellung einer Verstärkung, die aus einem Draht (4) aufgebaut wird, vorgesehen ist, wobei die Vorrichtung einen Rahmen umfasst und dazu vorgesehen ist, mit einer in etwa toroidalen Form (1) zusammenzuwirken, die drehbar um eine Drehachse auf dem Rahmen montiert ist, auf der nach und nach eine Verstärkung aufgebaut wird, indem Bögen des Drahts entlang einer Trajektorie, auf der der Draht liegen soll, auf der Oberfläche der Form abgelegt werden, wobei die Vorrichtung umfasst:
• eine Ablegeeinrichtung zum Anbringen des Drahts, in der der Draht gleiten kann,
• einen Bewegungsmechanismus, der mindestens einen Arm (131) umfasst, auf den direkt oder indirekt die Ablegeeinheit montiert ist, wobei der Bewegungsmechanismus so aufgebaut ist, dass die Ablegeeinrichtung in einer cyclischen Hin- und Herbewegung transportiert wird, um sie in aufeinander folgenden Zyklen in die Nähe der Endpunkte zu führen, die für den Draht in der Trajektorie gewünscht werden,
• Pressfinger (2G und 2D) in der Nähe der Endpunkte der Trajektorie, um den Draht zumindest an den Enden auf der Form anzubringen,
**dadurch gekennzeichnet, dass**
• der Bewegungsmechanismus über einen Träger auf dem Rahmen montiert ist, der selbst auf Einrichtungen (132, 136, 137, 138) montiert ist, die in Bezug auf den Rahmen für einen Freiheitsgrad sorgen, der eine Bewegung innerhalb einer Ebene parallel zur Drehachse der Form ermöglicht.

2. Vorrichtung nach Anspruch 1, wobei die Einrichtungen (132), die dem Träger einen Freiheitsgrad geben, eine Bewegung parallel zur Drehachse der Form gestatten.

3. Vorrichtung nach Anspruch 1, wobei der Bewegungsmechanismus nur einen oszillierenden Arm (131) umfasst, an dessen Ende die Ablegeeinrichtung montiert ist.

4. Vorrichtung nach Anspruch 1, bei der der Bewegungsmechanismus mehrere Arme (31, 32, 33, 34) umfasst.

5. Vorrichtung nach Anspruch 3, bei der der Bewegungsmechanismus einen Hauptarm umfasst, der an den Enden von Hilfsarmen montiert ist.

6. Vorrichtung nach Anspruch 4, wobei die Ablegeeinrichtung direkt an dem Ende des Hauptarms montiert ist.

7. Vorrichtung nach einem der Ansprüche 1 bis 5, bei der die Ablegeeinrichtung eine ringförmige Kimme (6) ist.

8. Vorrichtung nach einem der Ansprüche 1 bis 6, die zusammen mit einem Antriebssystem verwendet wird, das die Drehung der Form, den Bewegungsmechanismus und die Pressfinger synchron steuert, wobei das Antriebssystem die Bewegung des Trägers synchron steuert.
